# EUROPEAN PATENT SPECIFICATION

(11) **EP 1 416 223 B1**
(45) Date of publication and mention of the grant of the patent: **13.02.2008**
(21) Application number: 03009407.2
(22) Date of filing: 25.04.2003
(51) Int. Cl.: F23G 5/00, F23G 5/16, F23J 15/08

(54) **Method and plant for energy cogeneration with a low environmental impact**
Verfahren und Anlage zur umweltfreundlichen Energienutzung von Abfällen in Verbindung mit einem Kombikraftwerk
Procédé et installation pour l'utilisation d'energie de déchets en centrale combiné ayant un effet faible pour l'environnement

(30) Priority: 29.10.2002 IT VI20020235
(43) Date of publication of application: 06.05.2004
(73) Proprietor: Sistema Ecodeco S.p.A., 20159 Milano (IT)
(72) Inventor: Donati, Gianni, 27010 Giussago (Pavia) (IT); Natta, Giuseppe, 27010 Giussago (Pavia) (IT)
(74) Representative: Minoja, Fabrizio

(56) References cited:
- US-A- 4 326 382
- US-A- 4 823 712
- US-A- 4 882 903
- US-A- 4 957 049
- US-A- 5 623 822
- US-A- 5 865 023
- US-A- 5 988 080
- PATENT ABSTRACTS OF JAPAN vol. 1998, no. 01, 30 January 1998 (1998-01-30) & JP 09 243034 A (MITSUI ENG &SHIPBUILD CO LTD), 16 September 1997 (1997-09-16)

## Description

### Field of application

This invention relates to the field of energy production in general, and in particular to a method and plant for generating energy with a low environmental impact by combining a gas-steam combined-cycle power station with a waste combustion plant.

### Prior art

Known methods use waste, in particular municipal solid waste (MSW), fractions thereof, biomasses of plant origin and the like to obtain energy, usually electrical energy, waste energy being not necessarily usable in situ and being available for local distribution.

Said known methods basically involve combustion of waste, which may be pre-crushed, with subsequent production in a boiler of steam which is expanded in an electrical energy generator according to the known technique in the field.

The main drawback of said known methods is their low energy yield, amounting to approx. 20%, compared with the yield of conventional thermal power stations (40%) and that of combined-cycle power stations (up to 55%). Said low efficiency is due to a number of factors, the most important being the fact that the scale of incinerating plants is much smaller than that of thermal power stations. In practice, the quantity of energy obtainable with conventional systems from the waste produced in a given area is one or two orders of magnitude smaller than that consumed in the same area.

Another factor is that waste has a variable energy content, with the result that the legislation requires a huge surplus of combustion air to prevent the production of unburnt material and micropollutants. This surplus, together with the need to maintain high flue temperatures, further reduces the yield.

Another drawback is constituted by the relatively low temperatures that can be maintained in steam superheaters due to corrosion of the pipes (normally below 420°C), which limit the enthalpy rises obtainable in the steam turbine.

Another cause of the low energy efficiency of conventional waste incinerators is the heat lost in ash and the evaporation heat of the water contained in the waste, which is discharged to the exterior in the form of steam through the stack.

The problem of heterogeneity of waste was recently tackled by preparing pre-treated, homogeneous waste in intermediate plants which fuels the plants better and allows better control of the combustion process.

If this prepared waste meets certain standards relating to the residual moisture and ash content and the net heat value, it is called secondary fuel (SF), unconventional fuel, or refuse-derived fuel (RDF). Hereafter, those terms will be considered synonymous, and refer to the same material.

The term "waste" will be used hereafter to refer to any of the following: municipal solid waste (MSW) originating from non-selective collection, waste originating from selective collection, fractions thereof containing fermentable material, biomasses originating from "set-aside" land, biomasses contained in refuse, and waste originating from other agricultural and/or industrial processes or from purification of effluent containing a fermentable organic fraction.

European patent no. 706839, filed by the present applicant, describes a method with high energy yield for the production of a secondary fuel (SF) with a high lower heat value from municipal solid waste (MSW), which said method uses the fermentation heat of the putrescible fraction present in the waste as energy for the evaporation of water.

Fractions with an inorganic base, which produce ash during combustion, are separated. As the weight of the waste thus prepared is approx. 50% of the original weight, and its lower heat value is more than twice that of the waste input, a waste preparation process of the type described above makes it possible to concentrate approx. four times the energy contained in the original untreated waste.

It is thus possible to build intelligent transfer stations (ITS) which allow waste to be received locally and its energy concentrated in an SF which can be easily and cheaply transported to centralised electrical energy production plants.

Italian patent no. 1297234, filed by the present applicant, describes a method and an apparatus for the preparation and transport of an SF to the end user.

In the case of prepared waste and secondary fuels, the applicable legislation requires combustion to take place under the same process conditions, in particular with the same air surplus as required for incinerators of unprepared waste, leading to an energy loss at the flue in the form of the sensible heat of the combustion gasses. This factor, together with the small scale of the thermal cycle of said plants and the low heat levels of the steam, leads to very low energy transformation yields (defined as the net quantity of electrical energy produced as a percentage of the total quantity of energy present in the fuel used), generally between 20% and 25%.

Conversely, large conventional thermal power stations have yields close to 40%.

Patent application no. VI2002A180 by the present applicant describes a method and plant for direct use of the heat of SF combustion gasses, suitably cleaned, in the boiler of the conventional power station to supply additional energy to the boiler and at the same time regulate the flame temperature for the purpose of controlling NOx production.

In the plant described in that application, the hot water or steam produced in the SF combustion chamber is used to preheat the condensate conveyed to the power station boiler. This means that the generation of the electrical energy obtained from SFs is more efficient than that obtainable from a small-scale dedicated plant.

The application of the invention described in this patent to a conventional power station is limited by the maximum amount of heat which can be recovered in the boiler gas and condensate recirculations particularly when the power station is running at minimum capacity.

Since the 1990s there has been a revival of combined-cycle power stations in which one or more gas turbines were combined with steam turbines. The hot gases produced by the gas turbine are used in a suitable boiler to produce steam which is expanded in the steam turbines. These cycles are the most efficient technology currently available, with yields close to 55%.

Conventional steam turbine power stations are consequently being repowered with the addition of gas turbines to improve the overall efficiency of the thermal cycle.

The repowering technique leads to savings of some 10 €/MWh in electrical energy production costs.

The economic advantages of using combined-cycle thermal power stations to produce electrical energy from prepared waste or SF are therefore obvious.

However, objective difficulties are posed by direct use of waste in such plants due to its physical nature and the presence of pollutants and ashes which are corrosive to the boilers and gas turbines of combined-cycle power stations.

In fact, most thermal power stations do not use solid fossil fuels, but fluid or fluidised materials. Even when coal is used, it is pre-pulverised with mills (which cannot be used for secondary fuels that have the opposite physical grinding characteristics to coal) and conveyed to the burners in the form of fluidised dust.

Moreover, the combustion of secondary fuels produces hydrochloric acid and other inorganic constituents which are corrosive at the operating temperatures of power stations, and ash which causes scaling of gas turbines and steam production boilers.

US patent no. 4,852,344 describes a waste combustion method and plant combined with a plant for generating electrical energy with a gas-steam cycle. Said known plant comprises a gas turbine which drives a first electrical energy generator and a waste combustion chamber destined to receive at least part of the flue gases from the gas turbine, still containing oxygen, as combustion fluid. The heat of the hot gases generated by the waste combustion chamber is used in a boiler for the production of steam, which expands in a steam turbine connected to a second electrical energy generator.

One drawback of said known plant is that the hot gases originating from the waste combustion chamber and sent to the boiler without any treatment should not heat the generated steam at temperatures over approx. 400°C to ensure that they do not corrode and destroy the boiler. The result is that the steam produced has a low enthalpy content, and the efficiency of the steam turbine is low.

Moreover, as the combustion gas contains less oxygen than air, the volume of gas output from the boiler is very high, because it represents the sum of the gas turbine flue gases and the hot gases from the waste combustion chamber, and therefore presents heavier purification problems than conventional waste combustion plants.

Methods are also known which recover energy from waste, in particular municipal solid waste (MSW) pre-treated to obtain secondary fuels (SFs), by gasification of the latter in order to obtain a combustible fluid that can be used to fuel existing power stations.

The fluid originating from the gasifiers is obtained by partial combustion of the prepared waste or secondary fuel (SF), and contains carbon dioxide, carbon monoxide, light hydrocarbons, heavy pitches, ash and acid products in addition to the nitrogen in the air used. However, purification of this fluid is very difficult. If dry purification is attempted, the heavy constituents are deposited on the surfaces and clog the filters. In the case of wet purification, difficulties are involved in subsequent purification of the aqueous effluent and disposal of the residues, together with loss of the sensible heat of the fluids obtained. Moreover, some constituents like carbonyl sulphide (COS) are hard to separate from the gas and therefore represent a source of SO₂ production after combustion which has to be purified.

As a result, current waste gasification plants merely feed a non-purified fluid to coal-fired power stations equipped with emission treatment systems. However, this system fails to address the pollution problems caused by the presence of new pollutants in the stack which were not originally envisaged, and boiler corrosion.

Cheap, reliable systems for purifying the fluid obtained from the gasifiers before its introduction into the combustion stage of a thermal power station are not currently available because of the difficulty involved in purifying the fluid obtained from gasification, as described above.

The solution described in said application VI2002A000180 can therefore constitute a good alternative to gasification for conventional power stations.

It should be mentioned that energy generated from renewable sources gives rise to the issue of "green certificates" whose value in Italy, for example, is approx. 0.084 €/kWh, and that the biomasses are 100% green, whereas MSW and the SF deriving from it may only be considered 50% green. The bonus granted to producers of electrical energy from renewable sources by means of green certificates therefore influences technical and economic considerations in addition to the fossil fuel saved (G.N. €163/kNm³).

US-5,988,080 shows (Cf. Fig.4) a cogeneration process using a pressurized MSWI gasifier and gas treatment system, a gas turbine and a steam turbine, whereby the pressurized combustible off-gas of the waste treatment is used together with air in the gas turbine and steam obtained from the waste combustion together with the flue gas of the gas turbine is used in the power station boiler.

JP-09243034 discloses (cf. Fig. 1) a cogeneration process using MSWI, a gas turbine and a steam turbine, whereby
a) with regard to the boiler
   hot gases obtained from the combustion are used together with the flue gases and the gas turbine in the boiler to generate the steam that expands in the steam turbine, and
b) with regard to the superheater
   steam obtained from waste combustion is used together with the flue gases of the gas turbine in the power station boiler to generate the steam that expands in the steam turbine.

In case a) no steam of the waste combustion is used, and in case b) no hot gas from the waste combustion is used.

US-4-957,049 discloses a method and a plant for the cogeneration of energy using a low calorific value MSWI combustor, a gas turbine and a steam turbine, whereby hot gasses obtained from the gas turbine are primerly used in the waste combustor and toghether with the flue gasses of the waste combustor in the power station boiler to generate steam that expands in the steam turbine.

The main aim of this system is to use the hot gasses from the gas turbine for sustaining the waste combustion.

US-4,823,712 discloses a special combustion system comprising a fluidized bed pirolyzer and a multi-stage fluidized bed combustor, and means for conveying solid materials between the two beds, with the aim of obtaining the combustion of solid, liquid and gaseous materials.

### Presentation of the invention

The main purpose of the invention is to eliminate said drawbacks by providing a method and plant designed to produce electrical energy from SF simply, cleanly and with a high yield, using large combined-cycle thermoelectric power stations.

A particular purpose is to provide a method and a plant that further increase the efficiency of the combined cycle power station, which already presents the maximum efficiency currently available, by contrast with the limitations imposed by the prior art, by combining an SF combustion plant with said combined-cycle power station.

A further purpose is to increase the efficiency of transformation of the energy of SFs into electrical energy to the levels typical of steam cycles in a combined-cycle power station.

Another purpose is to provide a method and a plant which supply all the energy contained in solid waste or SF to combined-cycle thermal power stations in the form of clean fluids.

A further purpose is to provide a method and plant which allow existing sites to be used to install plants for the production of energy from MSW, and in particular from SF.

A further purpose is to provide a method and a plant for incineration with generation of electrical energy from waste, prepared waste or secondary fuels which is simple, cheap and easy to run.

These purposes, and others which will be more particularly described hereafter, are achieved by a method for the generation of clean or low environmental impact energy by combining a gas-steam combined-cycle power station with a plant for the combustion of waste, in particular municipal solid waste, fractions thereof, biomasses of plant origin and the like, wherein said power station is the type comprising a gas turbine and a steam turbine in which the steam generated by a boiler that uses the flue gases of the gas turbine expands, said gas turbine, as claimed in claim 1.

Opportunely, the waste will be subjected to a preliminary treatment stage before being transformed into secondary fuel.

The combustion of the secondary fuel takes place with an air excess much higher than the stoichiometric value so as to achieve complete combustion of the waste and burnt gases with an oxygen content similar to that of the gases exiting from the gas turbine.

Said air excess can advantageously be between 50 and 200%, and preferably approx. 70%.

Moreover, the gases obtained from waste combustion are cleaned before being conveyed to the boiler by neutralisation and filtration at a pre-determined temperature, which is generally between 150 and 500°C and preferably between 200 and 400°C.

Opportunely, the hot burnt gases originating from waste combustion will be cleaned until the pollutant concentrations are compatible with discharge in the stack, and can also undergo a post-combustion stage so as to increase the temperature of the gas, eliminate residual traces of pollutants and reduce the NOx concentration.

The steam generated by waste combustion is obtained by release of heat to the cooling fluid of the combustion bed. The steam can be saturated or superheated, and in any event at a temperature lower than the maximum temperature compatible with the resistance of the cooling waste combustor circuit pipes, ie. normally below 420°C.

The steam generated in the waste combustion plant can be conveyed to the boiler of the combined-cycle power station and mixed with the steam produced by said boiler and brought to temperatures suitable for its use in the turbine.

A further aspect of the invention relates to a plant for the implementation of the method which, as claimed in claim 11, comprises a gas-steam combined-cycle power station associated with a plant for the combustion of waste, in particular municipal solid waste, fractions thereof, biomasses of plant origin and the like, wherein said power station includes at least one gas turbine fuelled by fossil fuels and at least one steam turbine fuelled by steam generated by a boiler that uses the flue gases of the gas turbine, characterised in that said waste combustion plant comprises:
- means for preparing waste for combustion
- means for combustion of prepared waste to obtain hot gases and steam
- means for cleaning said hot gases
- means for introduction of the cleaned hot gases into the boiler that feeds the steam turbine
- means for introduction of the steam generated by waste combustion into the circuit that feeds the steam turbine.

This method and plant enable a combined-cycle thermal power station to be fuelled by a clean, particle-free fluid which complies with environmental regulations for flue gases.

Moreover, subsequent combustion in the power station boiler further reduces and/or totally destroys any micropollutants present, and therefore reduces them well below the legal limits.

Finally, the method and plant according to this invention increase the efficiency of transformation of waste into electrical energy from the values typical of plants that produce electrical energy from waste to efficiency values similar to those obtainable in the steam cycle of combined-cycle plants.

However, this efficiency of the portion relating to the steam cycle alone is well below that obtainable in a conventional power station where the content and enthalpy rises of the steam produced are much higher.

Moreover, as the waste combustion plant according to the invention does not include the thermal cycle for production of electrical energy and is integrated into a much larger, often existing combustion plant, the investment costs are far lower than those required for a conventional SF combustion plant designed for electrical energy production.

As the temperature, pressure and oxygen content of the hot gas produced by the SF combustion plant is very similar to that produced by the gas turbine combustion chamber, there appear to be no limits on its use in view of the huge difference in scale between the two plants.

However, the greatest advantage is obtained with the combined cycle power station, wherein the input of external energy at competitive costs and with a bonus represented by "green certificates" enables the development of a new technology which guarantees electrical energy production at more competitive costs than the best technology nowadays available.

### Brief description of drawings

Further characteristics and advantages of the invention will become clear from the following detailed description of a method and plant for energy generation with a low environmental impact, provided by way of example but not of limitation, with the aid of the annexed drawings wherein:
**FIG. 1** is a simplified functional diagram of a typical combined-cycle power station
**FIG. 2** is a functional diagram of a waste combustion plant integrated with the energy production plant according to the invention
**FIG. 3** is a functional diagram of the energy generation plant according to the invention, obtained by combining a power station of the type illustrated in FIG. 1 with the waste combustion plant shown in FIG. 2.

### Detailed description of a preferred embodiment

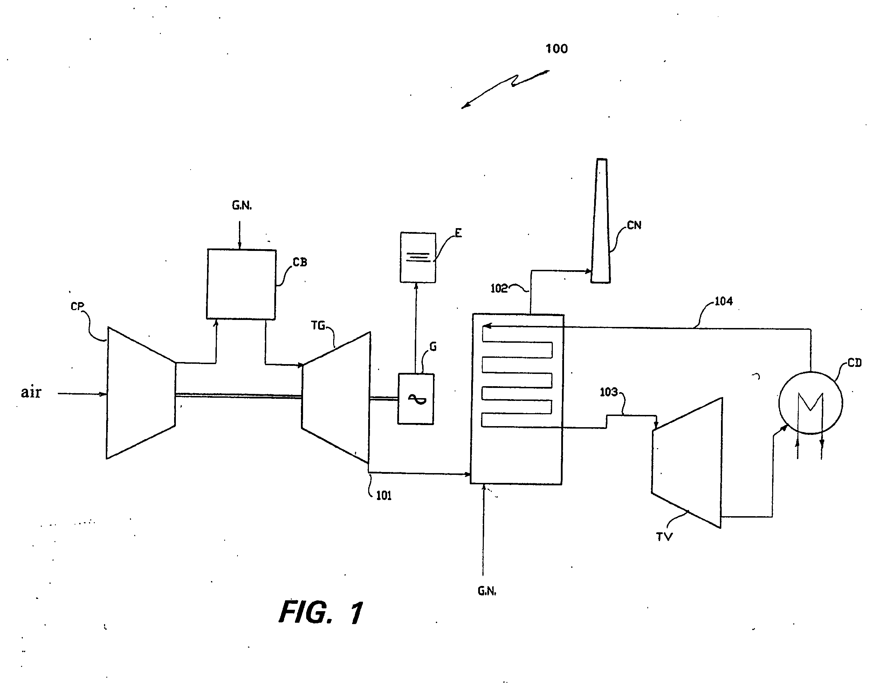

FIG. 1 illustrates a typical power station for electrical energy production of the gas-steam combined-cycle type according to the prior art, indicated conventionally as no. 100.
Power station 100 basically comprises a compressor CP connected to a pressurised combustion chamber CB which conveys hot gases to a gas turbine TG.

Combustion chamber CB, into which steam and/or condensate recycled from the downstream plant could be injected according to the known technique, could be fuelled by a fossil fuel such as natural gas. Turbine TG drives both compressor CP and a generator G, destined to generate electricity which is introduced into the network shown conventionally as E.

The flue gases of gas turbine TG, at high temperature and still containing large percentages of oxygen, are sent via a line 101 to a steam boiler CV where they may undergo further combustion, together with natural gas (GN) so as to raise the boiler temperature and consume part of the surplus oxygen.

Boiler CV may be the vertical time with ascending gasses, and may be equipped with exchange surfaces at different temperatures and pressures, from the economiser to the superheater, connected with booster pumps between said areas and operating with countercurrent flow between the gasses and the condensate and steam.

The cooled gasses exit from boiler CV along line 102 and are conveyed to stack CN.

The steam produced in boiler CV is conveyed via steam line 103 to one or more steam turbines TV, condensed into a condenser CD and the condensate is recycled to boiler CV via line 104.

The diagram of power station 100 shown in FIG. 1 is highly simplified, and does not show various steam inputs at different pressures from the boiler to the turbine or steam recycled from the turbine to superheat in the boiler which are actually present in the plant.

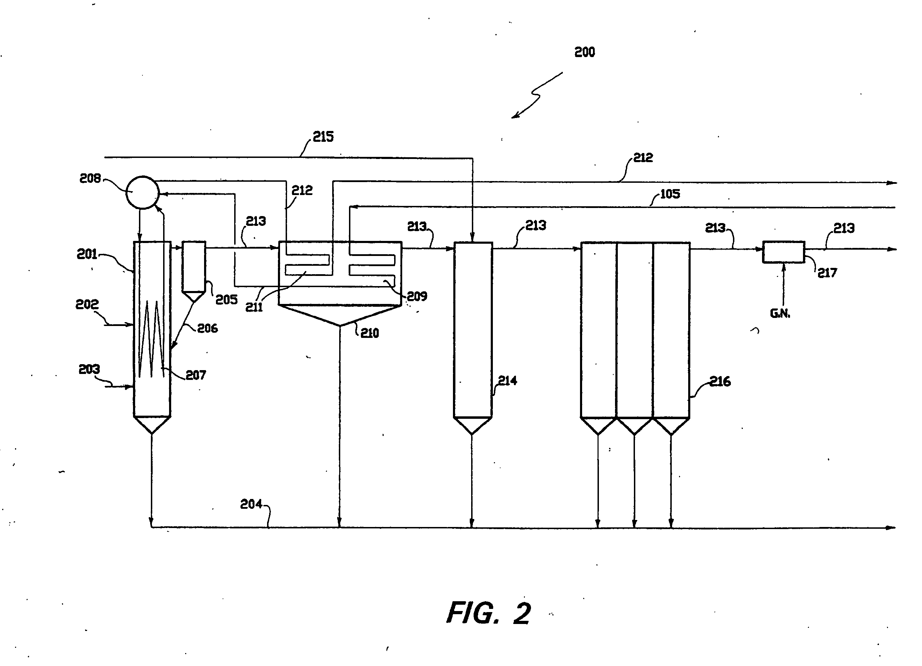

FIG. 2 is a functional diagram of a waste or SF combustion plant, indicated globally by no. 200, which can be integrated into the plant and method according to the invention.

Plant 200 comprises a combustion chamber 201 fuelled by prepared waste SF, such as the grate, fluidised bed or recirculated bed type.

Preferably, recirculated bed combustion chamber 201 will be the type operating with sand, magnesium carbonate and dolomite at temperatures of between 700°C and 900°C, and preferably close to 850°C.

Combustion and fluidisation air is introduced into combustion chamber 201 via line 202, while secondary fuel SF is introduced via line 203 and the ash is discharged via line 204. A cyclone 205 is present in the upper part of combustion chamber 201 to separate the solids present in the output gases and to reintroduce them into the combustion chamber 201 via line 206.

Opportunely, the combustion air should in between 50% and 200% excess with respect to the stoichiometric ratio, so as to guarantee an oxygen concentration output from combustion chamber 201 exceeding 6%; for the plant in question it could be similar to that of the flue gas of gas turbine TG of the power station, and normally under 13%.

Combustion chamber 201 contains a cooling circuit 207 with steam-water pipes fed with boiling water by the steam drum 208. Saturated steam is generated in cooling circuit 207 of combustion chamber 201 and collects in steam drum 208.

Before being introduced into steam drum 208, the condensate which arrives from condenser CD of the power station via line 105 is preheated in preheater 209 of a heat recuperator or economiser 210, wherein the hot gases from combustion chamber 201 are cooled.

A superheater 211 of the saturated steam which originates from the steam drum 208 may be installed upstream the pre-heater: this steam is conveyed via line 212 to power station boiler CV.

Advantageously, the steam fed along line 212 will be close to saturation and at a temperature preferably between 300°C and 350°C, ie. far lower than the maximum temperature compatible with the resistance of the waste combustor and superheater steam pipes.

The hot gases exiting the economiser 210 have a temperature of between 150 and 500°C, and preferably between 200 and 400°C, but in any event such as to allow their subsequent cleaning.

A gas cleaning system comprising a neutralising tower 214, supplied with alkalis via line 215, and a hot gas dust removal or filtration plant 216 is installed downstream of economiser 210, along line 213 of the hot gases.

Advantageously, activated carbon powder, not shown in the figures, can be introduced in the hot gas stream before dust removal to adsorb condensed aromatic compounds and chlorinated compounds. False cold air not shown in the figures could also be introduced to regulate the temperature and oxygen enrichment.

After exiting from neutralization 214 and filtration 216 through line 213, the hot gases may undergo further combustion in a separate post-combustion chamber 217 with the addition of natural gas, or directly in power station boiler CV, as will be more particularly described hereafter.

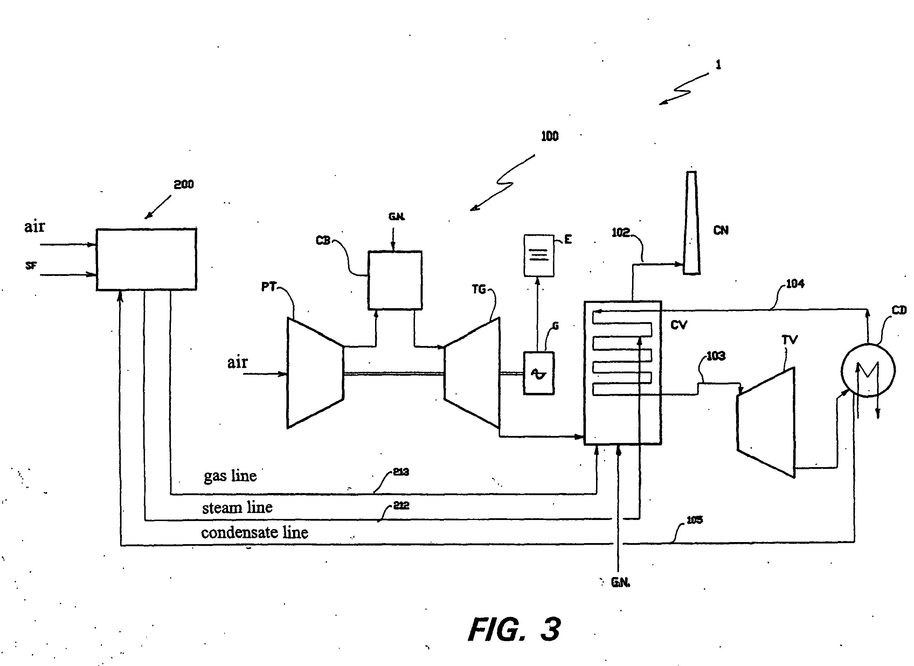

The plant according to the invention, indicated globally as no. 1, consists of a combination of combined-cycle thermal power station 100 illustrated in FIG. 1 and waste combustion plant 200 illustrated in FIG. 2, according to the general scheme illustrated in FIG. 3.

In plant 1 according to the invention, the hot gases output by combustion plant 200, cleaned and possibly subjected to post-combustion, are conveyed along line 213 to boiler CV of power station 100, to which the flue gases of gas turbine TG of the power station are also conveyed along line 101.

The superheated steam generated in boiler CV of the power station expands in steam turbine TV and is then sent to power station condenser CD.

The steam produced by waste combustion plant 200 does not usually have a sufficient temperature or degree of superheating to be used directly in steam turbine TG of power station 100. It may consequently be advantageous to produce saturated steam in waste combustion plant 200, simplifying the combustion chamber of that plant.

In such case, as shown in FIG. 3, all or part of the saturated steam can be introduced into the steam circuit at high or medium pressure in boiler CV, and can be superheated to a temperature suitable for its use in steam turbine TV of power station 100.

Some examples of particular embodiments of an integrated power station/waste combustion plant according to the invention are set out below.

### EXAMPLE 1

This example relates to a waste combustion plant 200 fed with a SF having a lower heat value of 16700 kJ/kg (4000 kcal/kg) of the type illustrated in FIG. 2, equipped with a recirculated fluidised-bed combustion chamber 201, a heat economiser or recuperator 209, a neutralising tower 214 and an electrostatic filter 216, and having the capacity to bum 40 t/h of SF. The plant operates with an oxygen excess of approx. 78%, and can produce 475 t/h of burnt cleaned gases which comply with the limits imposed on environmental emissions, with an 8% oxygen content and a temperature of 400°C, together with 170 t/h of saturated steam at 311°C and 9.8 MPa (98 bars). The plant also produces approx. 8 t/h of ash to be inertisized and disposed in landfills.

SF combustion plant 200 is associated with a combined-cycle power station 100 able to deliver an electrical power of 384 MW, 253 MW of which is produced in the gas turbine and 131 MW in the steam turbine of the type schematically illustrated in FIG. 1.

Gas turbine TG of power station 100 has a consumption of 67.81 kNm³/h of natural gas with a lower heat value of 36600 kJ/Nm³ (8749 kcal/Nm³) and produces 2361 t/h of burnt gas at 604°C with an oxygen content of approx. 11.5%.

The flue gases are sent to vertical boiler CV where steam at low, medium and high pressure are produced, with an enthalpy content equivalent to 429 t/h of steam at 540°C and 9.8 MPa (98 bars), while the gasses are discharged from boiler CV to the stack CN at the temperature of approx. 100°C.

The steam generated by boiler CV is expanded in a three-stage turbine TV, and the condensate produced by condenser CD is recycled at 24°C at the top of boiler CV.

The specific production of electrical energy is 5.66 kWh/Nm³ of natural gas, as against approx. 4-4.2 kWh/Nm³ for conventional power stations.

In this case, as shown in FIG. 3, the waste combustion plant 200 and the combined-cycle power station 100 are easily combined by adding the hot gases, from neutralised, filtered hot gas line 213, and the flue gases from turbine TF to boiler CV, and the steam from line 212 of plant 200 to the high-pressure superheating cycle of boiler CV.

In this example, natural gas post-combustion chamber 217 is not activated, so the natural gas consumption of plant 1 remains the same as that of combined-cycle power station 100 operating alone.

The enthalpy balance in boiler CV leads to the production of 616 t/h of steam at 540°C which generates 188 MW in the turbine, a net increase of 57 MW over the combined cycle mentioned above, without additional consumption of natural gas.

The electrical energy produced per unit of natural gas fuel is 6.5 kWh/Nm³, a 15% increase on the combined-cycle power station alone.

The electrical energy produced by the SF combustion plant therefore amounts to 57 MW, and the corresponding natural gas saving, with the specific cycle consumption, amounts to 10.1 kNm³/h
If the energy produced by SF is 50% renewable, and therefore gives rise to the issue of "green certificates", the value of which is estimated at 0.084 €/kWh, an additional bonus of 2400 €/h is obtained.

At the cost of 163 €/kNm³, the additional natural gas saving would be equivalent to 14.7 kNm³/h that in addition to the previous 10.1 kNm³/h, makes a total of 24.8 kNm³/h, ie. approx. 31 % of the total consumption of the power station.

Conversely, the production of electrical energy compared with the SF consumed is around 1.4 kWh/kg of SF, ie. an intermediate value between that of the plant which produces electrical energy directly from SF, namely 1 kWh/kg, and that obtained with patent VI2002A000180 applied to conventional power stations.

### EXAMPLE 2

We considered the same plant set-up as described in EXAMPLE 1, combined with plant 200, and the same operating conditions, except that the natural gas burner designed to regulate the temperature of the flue gases of gas turbine TG was activated at the base of the boiler.

In the case of plants not fitted with this burner, auxiliary post-combustion chamber 217 can be activated before entry into the boiler to increase the temperature of the cleaned gasses along line 213 from 400°C to values close to those of the flue gases from gas turbine TG.

The main purpose of this operation is to perform post-combustion of the gasses cleaned in the SF plant so as to eliminate from the burnt gases all traces of aromatic or chlorinated compounds, even under the limit allowed for release into the environment, after removal of their precursors in plant 100, and to use the flame in a low-oxygen environment at high temperature to reduce any NOx present.

We operated in such as way as to increase the temperature of the cleaned gasses originating from the SF combustion plant to the same temperature of 604°C as the gasses originating from gas turbine TG, adjusting their concentration to an oxygen volume concentration of approx. 3% and producing steam at 540°C in the boiler.

Steam turbine TV produces 198 MW with total production of 450 MW, 68 MW more than combined-cycle plant 100 alone, but with a natural gas consumption of approx. 71 kNm³/h, 3.1 kNm³/h more than for the combined cycle alone.

The specific consumption is in line with the cases described in EXAMPLE 1, and amounts to 6.3 kWh/Nm³ of natural gas.

The additional energy generated, attributable to SF, can be calculated by subtracting the proportion accounted for by higher natural gas consumption from the additional energy produced.

The green energy generated is therefore 47.2 MW which, with the green certificates, is equivalent to 12.2 kNm³/h of natural gas, and is therefore lower than the amount resulting from the previous example.

If this value is added to the gas equivalent to the higher energy production less the energy actually consumed, the result is a natural gas saving amounting to approx. 30% of the total natural gas consumed by the power station.

This example demonstrates that it may be advantageous to use natural gas in the boiler to control the quality of emissions into the environment more effectively rather than to produce more energy.

### EXAMPLE 3

The same power station 100 of EXAMPLE 1 combined with a waste combustion plant 200 having the capacity of 20 t/h.

The plant 200 produces about 200 t/h of burnt gases with an oxygen content of 6% and a temperature of 200°C and in addition 109 t/h of saturated steam at 311°C and 9.8 MPa (98 bar).

The burnt gases from line 213 are sent to the upper zone and at lower temperature of the boiler CV where they mix with the already cooled gasses from the gas turbine TG.

The steam through line 212 is used in the high pressure cycle of the boiler CV.

The boiler CV gives the equivalent of 523 t/h of steam at 540°C yielding in turbine 160 MW with a net power increase of 29 MW due to the energy imported from the plant 200.

The power produced referred to the natural gas only is therefore of 6.1 kWh/Nm^{3,} 7.6% higher than that obtainable from the power station working alone and the produced energy per unit of consumed SF is 1.45 kWh/kg.

The natural gas substituted by SF is about 5000 Nm³/h and the equivalent one, with 50% green certificates, is more than twice this amount

It should be mentioned at this point that boiler CV is far more complex than shown in Figs. 1 and 3, as it is equipped with an economiser, circuits and steam drums at various pressures, and steam is exchanged with the turbine.

Steam at a lower pressure and near saturation could therefore be opportunely introduced into the boiler with similar results to those shown in the previous examples, as, for a given SF combustor capacity, the enthalpy introduced is the same whether the steam is saturated or superheated.

When operating with saturated steam it is possible to keep the temperature well under the 420°C limit allowed in the SF combustion steam circuit, even at high pressures like those of the high-pressure section of power station boiler CV, and to give this boiler the less onerous task of superheating.

On the basis of the factors set out above and the cases demonstrated, combining the SF combustion plant with combined-cycle power station 1 can increase the energy produced by the power station from 6 to 13-15% following SF combustion capacity.

This benefit is increased even further if the bonus associated with the availability of "green certificates" is taken into account.

The yield of SF in kWh/kg is approx. 30-40% times higher than that obtainable with a plant which produces electrical energy from waste, but a little lower than that obtainable with the known technique for the use of the same heat as produced by an SF combustion plant in a conventional power station.

This is attributable to the different efficiency level of the steam cycle in the combined power station, which is between those of the two plants mentioned above in terms of the enthalpy rise obtainable with the steam.

However, the gas and steam produced by an SF combustion plant and a combined-cycle power station are very similar to one another in terms of temperature and pressures, and different from those of the conventional power station.

This makes it possible to mix said fluids in all ratios, and therefore allows the construction of large-scale SF combustion plants, with incremental benefits on the power station when the capacity of the SF combustion plant is increased.

Moreover, steam at a lower temperature, and possibly saturated steam, can be employed without any loss of efficiency in the use of its enthalpy and with significant advantages in terms of construction of the SF combustion plant.

It is also possible to use subsequent combustion of cleaned gasses, still rich in oxygen from SF combustion plant 200, to increase their temperature in order to perform further cleaning, removing any traces of chlorinated organic substances still present, and reducing the NOx formed in the combustion chambers of the gas turbine and the SF plant.

Elimination of compounds containing chlorine in the SF plant ensures that these chlorinated organic compounds will not reform in the boiler, and the introduction of a natural gas flame with an oxygen deficit helps to reduce NOx.

A further advantage is that it is unnecessary to acquire new sites for waste incinerators; the invention solves the problem of locating such plants, which can be replaced by auxiliary plants located on the site of existing combined-cycle power stations.

In the case of new combined plants to be built, it appears possible to design the steam cycle, and especially the boiler and the turbine, in such a way as to obtain the greatest advantages from the combination of the combined-cycle power station with the SF combustion plant.

According to current legislation in some UE Countries, which aims to encourage the use of renewable energy production sources, when the proportion of production from this type of source in a plant exceeds 4%, the plant can be classed as a user of renewable sources with a considerable favourable impact on the environment.

As approx. 50% of secondary fuel consists of materials classified as renewable for energy purposes, thermal power stations which can produce at least 4% of their energy with such sources are classed as users of renewable sources, and authorised to issue the corresponding certificate, thus enjoying further advantages in addition to the fuel saving and greater efficiency achieved.

## Claims

1. A method for the energy cogeneration which involves combining a power station (100) for the production of electrical energy with a plant (200) for the combustion of waste, in particular municipal solid waste (MSW), fractions thereof, biomasses of plant origin and the like, wherein said power station (100) is the gas-steam combined-cycle type, which includes at least one gas turbine (TG) and one steam turbine (TV) in which the steam generated by a boiler (CV), that uses the flue gases of gas turbine (TG) and the hot gases from waste combustion, expands, **characterised in that** the steam obtained from waste combustion in said plant (200) is used together with the flue gases of gas turbine (TG) and the hot gases from waste combustion in power station boiler (CV) to generate the steam that expands in steam turbine (TV) so as to optimise global efficiency and improve the quality of the final emissions, and **in that** the gases obtained from waste combustion are cleaned by neutralisation and filtration at a pre-determined temperature before being conveyed to the boiler (CV).

2. Method as claimed in claim 1, **characterised in that** it includes a preliminary stage of treatment of the waste to transform it into secondary fuel (SF).

3. Method as claimed in claim 2, **characterised in that** the combustion of said secondary fuel (SF) takes place with an air excess considerably higher than the stoichiometric value so as to achieve complete combustion of the burnt gas and waste with an oxygen content similar to that of the gases output from gas turbine (TG).

4. Method as claimed in claim 3, **characterised in that** the excess air for complete waste combustion is between 50 and 200%, and preferably around 70%.

5. Method as claimed in claim 1, **characterised in that** the neutralisation and filtration temperature is between 150 and 500°C, and preferably between 200 and 400°C.

6. Method as claimed in claim 1, **characterised in that** the burnt gases originating from waste combustion are cleaned until the pollutant concentrations are compatible with discharge into the environment.

7. Method as claimed in claim 6, **characterised in that** said burnt, cleaned gases undergo a post-combustion stage so as to increase the gas temperature, eliminate residual traces of pollutants and reduce the NOx concentration.

8. Method as claimed in claim 1, **characterised in that** the steam generated by waste combustion is saturated or superheated to a temperature lower than the maximum temperature compatible with the resistance of the steam circuit pipes of the waste combustion plant (200), said maximum temperature normally being under 420°C.

9. Method as claimed in claim 8, wherein the steam generated in waste combustion plant (200) is conveyed to boiler (CV) of the combined-cycle power station together with the steam produced by said boiler, and brought to the right temperatures for its use in turbine (TV).

10. Method as claimed in claim 9, **characterised in that** said steam is preferably saturated at a pressure equal to or greater than that of the circuit of boiler (CV) into which it is introduced.

11. Plant for the generation of clean or low environmental impact energy which implements the method claimed in one or more of the preceding claims, comprising a gas-steam combined-cycle power station (100) associated with a plant (200) for the combustion of waste, in particular municipal solid waste (MSW), fractions thereof, biomasses of plant origin and the like, wherein power station (100) comprises at least one gas turbine (TG) fuelled by fossil fuels and at least one steam turbine (TV) fuelled by the steam generated by a boiler (CV) that uses the flue gases of gas turbine (TG), **characterised in that** said waste combustion plant (200) comprises:
- means for the preparation of waste for combustion (SF)
- means (201) for the combustion of prepared waste (SF) so as to produce hot gases and steam
- means (214, 216) for cleaning said hot gases
- means (213) for introduction of the cleaned hot gases into boiler (CV) which feeds steam turbine (TV)
- means (212) for introduction of the steam generated by waste combustion into the boiler circuit which feeds steam turbine (TV).

12. Plant as claimed in claim 11, **characterised in that** said waste preparation means include means for the preparation of a secondary fuel (SF).

13. Plant as claimed in claim 11, **characterised in that** said waste combustion means (201) comprise at least one grate or fluidised-bed combustion reactor.

14. Plant as claimed in claim 11, **characterised in that** it includes a circuit (207) for cooling reactor (201) by means of water originating from the condenser (CD) of the power station with steam production.

15. Plant as claimed in claim 14, **characterised in that** it includes an economiser (210) installed downstream of said reactor (201) to recover at least part of the enthalpy of the hot gases exiting from reactor (201) and transfer it to the coolant fluid of said circuit and to the steam generated by waste combustion.

16. Plant as claimed in claim 11, **characterised in that** said cleaning means include at least one neutralisation chamber (214) and at least one bag filter or electrostatic filter.

17. Plant as claimed in claim 11, **characterised in that** said means for the introduction of cleaned hot gases include an auxiliary burner (217) for post-combustion thereof.

18. Plant as claimed in claim 11, **characterised in that** said steam introduction means (212) are positioned in pre-determined areas of boiler (CV).

19. Plant as claimed in claim 18, **characterised in that** said pre-determined areas of boiler (CV) are those with the highest pressure.

## Patentansprüche

1. Verfahren zur Kraft-Wärme-Kopplung, das die Kombination eines Kraftwerks (100) für die Erzeugung elektrischer Energie mit einer Abfallverbrennungsanlage (200) - insbesondere für städtische Feststoffabfälle, Teile städtischer Abfälle, Biomasse pflanzlicher Herkunft und Ähnliches - beinhaltet, wobei das Kraftwerk (100) ein Gas- und Dampfturbinenkraftwerk ist, das zumindest eine Gasturbine (TG) und eine Dampfturbine (TV) umfasst, in der der von einem Dampfkessel (CV) unter Verwendung der Abgase der Gasturbine (TG) und der Heißgase aus der Abfallverbrennung erzeugte Dampf sich ausdehnt, **dadurch gekennzeichnet, dass** der aus der Abfallverbrennung in der genannten Anlage (200) gewonnene Dampf zusammen mit den Abgasen der Gasturbine (TG) und den Heißgasen aus der Abfallverbrennung in dem Dampfkessel (CV) des Kraftwerks zur Erzeugung des Dampfes verwendet wird, der sich in der Dampfturbine (TV) ausdehnt, um die allgemeine Effizienz zu optimieren und die Qualität der endgültigen Emissionen zu verbessern, insofern als die aus der Abfallverbrennung gewonnenen Gase durch Neutralisation und Filtration bei einer vorgegebenen Temperatur gereinigt werden, bevor sie in den Boiler (CV) geleitet werden.

2. Verfahren nach Anspruch 1, **dadurch gekennzeichnet, dass** es eine Vorstufe der Abfallbehandlung beinhaltet, um den Abfall in Sekundärbrennstoff (SF) umzuwandeln.

3. Verfahren nach Anspruch 2, **dadurch gekennzeichnet, dass** die Verbrennung des Sekundärbrennstoffs (SF) mit einem Luftüberschuss stattfindet, der bedeutend größer ist als der stoichiometrische Wert, um eine vollständige Verbrennung des verbrannten Gases mit einem Sauerstoffgehalt wie dem der von der Gasturbine (TG) abgegebenen Gase zu erreichen.

4. Verfahren nach Anspruch 3, **dadurch gekennzeichnet, dass** der Luftüberschuss für die vollständige Abfallverbrennung zwischen 50 % und 200 % und vorzugsweise bei circa 70 % liegt.

5. Verfahren nach Anspruch 1, **dadurch gekennzeichnet, dass** die Neutralisations- und Filtrationstemperatur zwischen 150° C und 500° C und vorzugsweise zwischen 200° C und 400° C liegt.

6. Verfahren nach Anspruch 1, **dadurch gekennzeichnet, dass** die aus der Abfallverbrennung stammenden verbrannten Gase gereinigt werden, bis die Schadstoffkonzentrationen für ein Auslassen in die Umgebung verträglich sind.

7. Verfahren nach Anspruch 6, **dadurch gekennzeichnet, dass** die verbrannten, gereinigten Gase eine Nachverbrennungsstufe durchlaufen, um die Gastemperatur zu erhöhen, verbleibende Schadstoffspuren zu eliminieren und die NOx-Konzentration zu reduzieren.

8. Verfahren nach Anspruch 1, **dadurch gekennzeichnet, dass** der durch die Abfallverbrennung erzeugte Dampf gesättigt oder auf eine Temperatur überhitzt wird, die unterhalb der mit der Wärmewiderstandsfähigkeit der Dampfkreislaufrohre der Abfallverbrennungsanlage (200) kompatiblen Maximaltemperatur liegt, wobei diese Maximaltemperatur normalerweise unter 420° C liegt.

9. Verfahren nach Anspruch 8, wobei der in der Abfallverbrennungsanlage (200) erzeugte Dampf zu dem Dampfkessel (CV) des Gas- und Dampfturbinenkraftwerks geleitet und zusammen mit dem von dem Dampfkessel erzeugten Dampf auf die richtige Temperatur für die Verwendung in der Turbine (TV) gebracht wird.

10. Verfahren nach Anspruch 9, **dadurch gekennzeichnet, dass** der Dampf vorzugsweise bei einem Druck größer gleich dem des Dampfkesselkreislaufs (CV), in den er eingeleitet wird, gesättigt ist.

11. Kraftwerk zur Erzeugung von sauberer Energie oder von Energie mit geringer Umweltschädlichkeit, das das in einem oder mehreren der vorangehenden Ansprüche beanspruchte Verfahren anwendet, umfassend ein Gas- und Dampfturbinenkraftwerk (100), das verbunden ist mit einer Anlage (200) zur Verbrennung von Abfall, insbesondere von städtischen Feststoffabfällen, Teilen städtischer Abfälle, Biomasse pflanzlicher Herkunft und Ähnlichem, wobei das Kraftwerk (100) zumindest eine mit fossilem Brennstoff betriebene Gasturbine (TG) und zumindest eine mit dem von einem Dampfkessel (CV), der die Abgase der Gasturbine (TG) nutzt, erzeugten Dampf betriebenen Dampfturbine (TV), **dadurch gekennzeichnet, dass** diese Abfallverbrennungsanlage (200) umfasst:
- Mittel zur Vorbereitung von Abfall für die Verbrennung (SF),
- Mittel (201) für die Verbrennung von vorbereitetem Abfall (SF), um Heißgase und Dampf zu erzeugen,
- Mittel (214, 216) zur Reinigung der genannten Heißgase,
- Mittel (213) zur Einleitung der gereinigten Heißgase in den Dampfkessel (CV), der die Dampfturbine (TV) speist,
- Mittel (212) zum Einleiten des durch Abfallverbrennung erzeugten Dampfes in den Dampfkesselkreislauf, der die Dampfturbine (TV) speist.

12. Anlage nach Anspruch 11, **dadurch gekennzeichnet, dass** die genannten Mittel zur Abfallvorbereitung Mittel zur Herstellung von Sekundärbrennstoff (SF) einschließen.

13. Anlage nach Anspruch 11, **dadurch gekennzeichnet, dass** die Abfallverbrennungsmittel (201) zumindest einen grate reactor oder Fließbettreaktor umfassen.

14. Anlage nach Anspruch 11, **dadurch gekennzeichnet, dass** die Anlage einen Kreislauf (207) zur Kühlung des Reaktors (201) durch Wasser, das bei der Dampferzeugung im Kondensator (CD) des Kraftwerks entsteht, enthält.

15. Anlage nach Anspruch 14, **dadurch gekennzeichnet, dass** die Anlage einen stromab von dem Reaktor (201) installierten Vorwärmer (210) enthält, um zumindest einen Teil der Enthalpie der den Reaktor (201) verlassenden Heißgase zurückzugewinnen und sie auf das Kühlfluid des genannten Kreislaufs und auf den durch die Abfallverbrennung erzeugten Dampf zu übertragen.

16. Anlage nach Anspruch 11, **dadurch gekennzeichnet, dass** die Reinigungsmittel zumindest eine Neutralisationskammer (214) und zumindest einen Schlauchfilter oder elektrostatischen Filter einschließen.

17. Anlage nach Anspruch 11, **dadurch gekennzeichnet, dass** die Mittel zur Einleitung der gereinigten Heißgase einen Hilfsbrenner (217) für die Nachverbrennung der Heißgase einschließen.

18. Anlage nach Anspruch 11, **dadurch gekennzeichnet, dass** die Dampfeinleitungsmittel (212) in vorgegebenen Bereichen des Dampfkessels (CV) platziert sind.

19. Anlage nach Anspruch 18, **dadurch gekennzeichnet, dass** in vorgegebenen Bereichen des Dampfkessels (CV) die Bereiche mit dem höchsten Druck sind.

## Revendications

1. Procédé pour la cogénération d'énergie qui implique l'étape consistant à combiner une centrale électrique (100) pour la production de l'énergie électrique avec une installation (200) pour la combustion des déchets, en particulier les déchets solides urbains (MSW), des fractions de ceux-ci, des biomasses d'origine végétale et similaires, dans lequel ladite centrale électrique (100) est de type à cycle combiné gaz-vapeur, qui comprend au moins une turbine à gaz (TG) et une turbine à vapeur (TV) dans laquelle la vapeur générée par une chaudière (CV), qui utilise les gaz d'évacuation de la turbine à gaz (TG) et les gaz chauds provenant de la combustion des déchets, se dilate, **caractérisé en ce que** la vapeur obtenue par la combustion des déchets dans ladite installation (200) est utilisée conjointement aux gaz d'évacuation de la turbine à gaz (TG) et aux gaz chauds provenant de la combustion des déchets dans la chaudière (CV) de la centrale électrique pour générer de la vapeur qui se dilate dans la turbine à vapeur (TV) afin d'optimiser le rendement global et améliorer la qualité des émissions finales, et **en ce que** les gaz obtenus par la combustion des déchets sont nettoyés par neutralisation et filtration à une température prédéterminée avant d'être transportés vers la chaudière (CV).

2. Procédé selon la revendication 1, **caractérisé en ce qu'**il comprend une phase préliminaire de traitement des déchets pour les transformer en combustible secondaire (SF).

3. Procédé selon la revendication 2, **caractérisé en ce que** la combustion dudit combustible secondaire (SF) a lieu avec un excès d'air nettement supérieur à la valeur stoechiométrique afin d'obtenir la combustion complète du gaz de combustion et des déchets avec une teneur en oxygène similaire à celle des gaz sortant de la turbine à gaz (TG).

4. Procédé selon la revendication 3, **caractérisé en ce que** l'excès d'air pour la combustion complète des déchets est compris entre 50 et 200 %, et de préférence environ 70 %.

5. Procédé selon la revendication 1, **caractérisé en ce que** la température de neutralisation et de filtration est comprise entre 150 et 500 °C, et de préférence entre 200 et 400 °C.

6. Procédé selon la revendication 1, **caractérisé en ce que** les gaz de combustion provenant de la combustion des déchets sont nettoyés jusqu'à ce que les concentrations de polluants soient compatibles avec l'évacuation dans l'environnement.

7. Procédé selon la revendication 6, **caractérisé en ce que** lesdits gaz de combustion nettoyés sont soumis à une phase de post-combustion pour augmenter la température du gaz, supprimer les traces résiduelles de polluants et réduire les concentrations d'oxyde d'azote.

8. Procédé selon la revendication 1, **caractérisé en ce que** la vapeur générée par la combustion des déchets est saturée ou surchauffée à une température inférieure à la température maximum compatible avec la résistance des conduits du circuit de vapeur de l'installation de combustion des déchets (200), ladite température maximum étant normalement inférieure à 420 °C.

9. Procédé selon la revendication 8, dans lequel la vapeur générée dans l'installation de combustion de déchets (200) est transportée jusqu'à la chaudière (CV) de la centrale électrique à cycle combiné conjointement à la vapeur produite par ladite chaudière, et amenée aux bonnes températures pour son utilisation dans la turbine (TV).

10. Procédé selon la revendication 9, **caractérisé en ce que** ladite vapeur est de préférence saturée à une pression égale ou supérieure à celle du circuit de la chaudière (CV) dans laquelle elle est introduite.

11. Installation pour la génération d'énergie propre ou à faible impact environnemental qui met en oeuvre le procédé selon une ou plusieurs des revendications précédentes, comprenant une centrale électrique à cycle combiné de gaz-vapeur (100) associée à une installation (200) pour la combustion des déchets, en particulier des déchets solides urbains (MSW), des fractions de ceux-ci, des biomasses d'origine végétale et similaires, dans laquelle la centrale électrique (100) comprend au moins une turbine à gaz (TG) alimentée avec des combustibles fossiles et au moins une turbine à vapeur (TV) alimentée par la vapeur générée par une chaudière (CV) qui utilise les gaz d'évacuation de la turbine à gaz (TG), **caractérisée en ce que** ladite installation de combustion de déchets (200) comprend :
des moyens pour la préparation des déchets pour la combustion (SF)
des moyens (201) pour la combustion des déchets préparés (SF) afin de produire des gaz chauds et de la vapeur
des moyens (214, 216) pour nettoyer lesdits gaz chauds
des moyens (213) pour l'introduction des gaz chauds nettoyés dans la chaudière (CV) qui alimente la turbine à vapeur (TV)
des moyens (212) pour l'introduction de la vapeur générée par la combustion des déchets dans le circuit de la chaudière qui alimente la turbine à vapeur.

12. Installation selon la revendication 11, **caractérisée en ce que** lesdits moyens de préparation de déchets comprennent des moyens pour la préparation d'un combustible secondaire (SF).

13. Installation selon la revendication 11, **caractérisée en ce que** lesdits moyens de combustion de déchets (201) comprennent au moins un réacteur de combustion à grille ou à lit fluidisé.

14. Installation selon la revendication 11, **caractérisée en ce qu'**elle comprend un circuit (207) pour refroidir le réacteur (201) au moyen de l'eau provenant du condenseur (CD) de la centrale électrique avec la production de vapeur.

15. Installation selon la revendication 14, **caractérisée en ce qu'**elle comprend un économiseur (210) installé en aval dudit réacteur (201) pour récupérer au moins une partie de l'enthalpie des gaz chauds sortant du réacteur (201) et la transférer au fluide de refroidissement dudit circuit et à la vapeur générée par la combustion des déchets.

16. Installation selon la revendication 11, **caractérisée en ce que** lesdits moyens de nettoyage comprennent au moins une chambre de neutralisation (214) et au moins un filtre à manches ou un filtre électrostatique.

17. Installation selon la revendication 11, **caractérisée en ce que** lesdits moyens pour l'introduction des gaz chauds nettoyés comprennent un brûleur auxiliaire (217) pour leur post-combustion.

18. Installation selon la revendication 11, **caractérisée en ce que** lesdits moyens d'introduction de vapeur (212) sont positionnés dans des zones prédéterminées de la chaudière (CV).

19. Installation selon la revendication 18, **caractérisée en ce que** lesdites zones prédéterminées de la chaudière (CV) sont celles avec la pression la plus élevée.
